# EUROPEAN PATENT APPLICATION

(11) **EP 2 933 778 A1**
(43) Date of publication of application: **21.10.2015**
(21) Application number: 14305554.9
(22) Date of filing: 15.04.2014
(51) Int. Cl.: G06T 17/00, G06T 7/00

(54) **Capturing an environment with objects**

(71) Applicant: ALCATEL LUCENT, 92100 Boulogne-Billancourt (FR)
(72) Inventor: Rondao Alface, Patrice, 2018 Antwerpen (BE); Aerts, Maarten, 2018 Antwerpen (BE); Namboodiri, Vinay, 2018 Antwerpen (BE)
(74) Representative: Philippaerts, Yannick

(57) **Abstract**

Method for capturing an environment with objects, using multiple 3D cameras, wherein the images of the cameras are used to generate 3D models, and wherein accuracy values are assigned to segments of the models allowing efficient refining of the models using the accuracy values.

## Description

### Technical Field

The invention relates to the field of capturing an environment with objects, using image capturing devices. More particularly, the invention relates to the field of 3 dimensional capturing of images.

### Background

Representation possibilities for 3D images have significantly improved in recent developments. Such improved 3D representation of an environment improves the viewing experience of the viewer.

In practice, there are two techniques to arrive at a 3D image. In TV and movie industries, a 3D camera is used to capture a 3D image based on stereovision (wherein each 3D image comprises two 2D images), or a sequence of 3D images (to create 3D video). The advantage of such capturing of 3D images via a camera is the high degree of similarity with the real situation. A drawback of such capturing of 3D images is that the final viewpoint for the user is (at least largely) determined by the position of the camera. In this context, it is noted that some viewpoint freedom is available, which is based on interpolation or extrapolation of captured images, however this freedom is limited.

In animation and gaming industries, an environment and objects are digitally created (typically via polygon meshes) in the form of a digital model. Based on the digital model, 3D views are generated. The advantage of generating a 3D image (or a 3D view) based on digital models is that any viewpoint can be chosen. Indeed in gaming, a viewer is often able to choose from different viewpoints, increasing the viewers freedom. A drawback is that digital model creation is time-consuming. As a result, models for 3D representation are only used to create fictional situations such as animation movies or games.

It is an object of the present invention to provide a mechanism allowing capturing an environment using a 3D image capturing device, and where the environment is representable from a substantially free viewpoint.

### Summary

To this end, the invention provides in a method for capturing an environment comprising at least one object, using at least two 3D image capturing devices located with respect to the environment at different viewpoints, the method comprising the steps of:
- capturing a first image of said environment via a first of the 3D image capturing devices, wherein the first image comprises an array of pixels each having color intensity values and each having a depth value;
- filtering the first image for determining outer borders of the environment;
- generating a digital environment in the form of a 3D model representing the outer borders;
- filtering the first image for determining the at least one object;
- generating at least one digital object in the form of at least one further 3D model representing the at least one object;
- positioning the at least one digital object in the digital environment to digitally re-create the environment with the at least one object;
wherein each of the models is segmented and wherein each segment is provided with an accuracy value determined based on a tolerance of the first 3D image capturing device, wherein the method further comprises:
- capturing a second image of said environment via a second of the 3D image capturing devices, wherein the second image comprises an array of pixels each having color intensity values and each having a depth value;
- selecting model segments with an accuracy value below a predetermined value;
- filtering the second image to extract pixels from the array that relate to the selected model segments; and
- updating the model segments using the information in the extracted pixels.

The method of the invention provides in an efficient way for creating digital models based on captured images. Thereby, the model is generated in multiple steps. In a first step, the model representing the outer borders is generated. In a further step, at least one further model is generated representing the at least one object in the environment. In these steps, an accuracy value is linked to parts of the so-generated models. There accuracy values are used in yet further steps to refine/update the models specifically at locations where the accuracy is low. As a result, processing effort is directed to those parts of the digital representation that need attention (since the accuracy is low in those parts). Since models are created, and the environment with the objects is thereby re-created in a digital form, any viewpoint can be selected by a user. Thereby the method of the invention provides a mechanism allowing capturing an environment using a 3D image capturing device, and where the environment is representable from a substantially free viewpoint.

Preferably the accuracy value is an indicator of the degree of certainty that parameters defining the model segment are correct. By taking into account an uncertainty for parameters defining the model, attention can be given when refining the model to those parts that have high uncertainties. This allows the model to be built in an efficient manner.

Preferably the degree of certainty is determined based on predetermined intensity values tolerances and the predetermined depth value tolerances of the capturing devices of the 3D image capturing devices. Every device comes in practice with technical specifications. For image capturing devices, these technical specifications comprise tolerances on accuracy of depth and of intensity values for the captured images. Taking these tolerances (which are predetermined in the technical specifications of the device) into account allows to assign a meaningful degree of certainty to the parameters defining the model (these parameters are determined based on the intensity and depth values captured by the device).

Preferably the 3D image capturing devices are time-of-flight cameras. Time-of-flight cameras are 3D image capturing devices that provide a reliable depth value for each of the pixels. Furthermore, each pixel comprises color intensity values (for example RGB values).

Preferably the model is composed of elements representing the outer borders and respectively comprising at least a ground surface element and one or a combination of at least one side surface element and a ceiling element. When capturing an environment, one can reasonably assume that there is a ground surface. In a 3D image, the ground surface can be recognized via fairly simple mathematical algorithms. Furthermore, one or a combination of side surfaces and ceilings are recognized. This can be implemented in multiple ways known to the skilled person. For example multiple combinations of ground/side/ceiling surfaces can be predetermined, wherein for each combination a degree of resemblance with the captured image is calculated. Based on the degree of resemblance, one of the predetermined combinations is chosen.

Preferably the at least one further model is formed as a polygon mesh being generated in multiple stages, wherein the number of elements forming the polygon mesh increases over the multiple stages. A polygon mesh is a digital collection of vertices, edges and faces that correspond to the scene/object representation for specific geometry positions. These vertices/edges/faces are defined as the elements of the polygon mesh. The number of elements is proportional to the degree of detail of representation. The invention proposes to start with a (preferably predetermined) limited number of elements in a first stage. In further stages, the meshes are updated by adding elements thereby making the mesh more complex (and consequently more detailed).

Preferably the segments of the meshes correspond to said elements. To each segment of the mesh, an accuracy value is assigned. By defining an element of the mesh as a segment, accuracy values are kept at a detailed level, allowing to keep a good track on which elements are defined with high certainty and which need refinement.

Preferably said step of generating the digital environment comprises completing the digital environment by filling occluded parts of the environment based on predetermined completion algorithms. Further preferably said step of generating the at least one digital object comprises completing the at least digital object by filling occluded parts of the environment based on predetermined completion algorithms. During the starting phase of creation of the model, one image (the first image) is used. In this one image, it will be evident that parts of the environment (for example the parts that lay behind the objects) and parts of the objects in the environment (for example the back side, from the point of view of the first image capturing device, of the objects) are occluded. This means no information is available for these parts of the environment/objects. Yet in creating the mesh, these parts are filled by completing the mesh.

Preferably the filled occluded parts are provided with a minimal accuracy value. This allows simple completion (without considering a realistic or sensible filling of occluded parts), since the filled parts are known to have a minimal accuracy. This minimal accuracy can be taken into account when the models are refined/updated/used. Minimal accuracy is defined as the lowest accuracy value in the range of accuracy values that is used.

Preferably the second image is captured simultaneously with the first image. This allows the model to be created based on multiple images from multiple viewpoints. Thereby, tests have shown that the multiple viewpoints have as an effect that a part of an environment/object that is occluded in the first image is likely not to be occluded in the second image. By capturing the first and second image substantially simultaneously, objects and environment can be estimated to be at the same place and in the same condition in the two images.

The invention further relates to a computer device or other hardware device programmed to perform the steps of the method of the invention.

The invention further relates to a data storage device encoding a program in machine-readable and machine-executable form to perform the steps of the method of the invention.

### Brief description of the figures

Some embodiments of apparatus and/or methods in accordance with embodiments of the present invention are now described, by way of example only, and with reference to the accompanying drawings, in which:
figure 1 illustrates an environment comprising two objects, captured with two cameras;
figure 2 illustrates an object captured with two cameras; and
figure 3 illustrates the construction process for capturing an environment with objects, and constructing a digital model that corresponds to the captured environment with objects.

### Detailed description of embodiments

Free Viewpoint Generation in the context of MultiView data captures (with optionally multiview depth data) is a challenging task that requires solving occlusions and interpolating or extrapolating data in order to synthesize a new virtual view on the basis of the available ones. In the prior art, there are mainly two types of approaches for solving this problem.

The first prior art technique belongs to the category of Image Based Rendering (IBR) techniques. The free viewpoint view is generated by processing pixels of the available views (first a view morphing and then occlusion solving). The occlusion handling is difficult because there is no 3D scene geometry available during this process, and missing pixels are synthesized by inpainting from most probable neighboring pixel information. The so-formed viewpoints are usually constrained to the multiple camera positions line/curve with small or large baseline interpolations.

The second prior art technique belongs to the 3D reconstruction algorithms also known as Geometry-Based Rendering. In this approach, a 3D model of the scene is reconstructed from the available captured views. Generating a new synthesized view is then done by simple geometry rendering. Novel viewpoints suffer no constraint as long as available viewable information is available. There are several types of scene geometric representations:
- Point based: point clouds
- Surface based: 3D meshes, surface lightfields, implicit surfaces
- Volume-based: voxels, octrees, plenoptic representations.

In the further description, for simplicity purposes, most examples are explained with 3D meshes (being polygon meshes). It will however be clear that point clouds, surface lightfields, implicit surfaces, voxels, octrees and plenoptic representations are technically equivalent. Particularly, 3D models can be built in any of these representations, and one representation can be transformed into another of these representations without undue burden for the skilled person. Therefore the present invention is not limited to the example of polygon meshes.

Although geometric representations are way more flexible than IBR in terms of number of output synthesized views, these representations suffer from 3D reconstruction errors as a result of noise (most often occurring in the depth sensors), errors in camera calibration, view texture or depth resolution etc. As a result, the rendering quality is usually not as good as in the case of IBR.

In order to provide more synthesized viewpoints than IBR techniques, while coping with the 3D reconstruction errors, probabilistic approaches have been proposed in the literature so as to account for these errors for volumetric approaches. This is done by creating occupancy grids or occupancy octrees, which assign to volume space elements (voxels, grid elements or leaves of octrees) flags such as "occupied", "empty" and "unknown", or probabilities of occupancy, based on available observations [1, 3, 4, 5, 6, 7, 8], or similarly by so-called "bundle-adjustment" techniques. This has been explored in robotic navigation and constrained indoors motion flow capture applications.

These solutions are not satisfactory because in case of volumetric approaches, the sampling of the captured 3D scene is suboptimal, generating too much data. Moreover, no distinction is accounted in the volume for respectively static or dynamic portions of the 3D scene. However, probabilistic approaches deeply depend on the dynamicity of the local geometry in order to improve the local signal to noise ratio (SNR), since static geometry positions can be observed several times over time and therefore allow for statistical filtering. Existing so-called probabilistic surface-based approaches targeting motion flow use a probabilistic occupancy grid or octree before the surface and motion extraction and use the same approach as the already mentioned volumetric approaches.

Besides probabilistic approaches, specific tree implementations such as general R-trees, or union of balls or alpha shapes, dynamic implicit surfaces are other representations that were designed for coping with the sampling issue of a 3D scene but not explicitly with the probabilistic nature of the position and shape of the surface due to input capture sensors. It follows that no representation from the prior art targets both sampling efficiency and a probabilistic framework.

In an embodiment of the invention, it is proposed to take into account uncertainty in the representation of the dynamic 3D scene (that can also be referred to as "4D scene" when taking into account the 3 spatial dimensions as well as the temporal dimension) itself with a multi-scale probabilistic surface approach. The 4D scene is represented as a set of globally static (background) and dynamic (foreground) geometry objects respectively, and for each of these objects, their position probability function (noted PPF, which is a 3D function with local support that determines for some positions in the scene space with which probability the object is positioned there) is also represented per temporal frame. Static portions of geometry are preferably represented by sets of surfaces (such as planes, quadrics etc.) and represent the background of the scene. Each surface or plane is described by one or a combination of its position, width, height and normal vector, multiple texture coordinates for specific viewing angles (as in a surface lightfield), all being subject to specific error bounds (also defined as tolerances) that depend on the multiview plus depth capture configuration. Dynamic portions of the scene geometry, that can also be seen as foreground objects, are described by a tree of multiscale three-dimensional functions with local support referred to as PPF. These functions, that can be e.g. spheres, represent the probability density of captured points positions observed at a given scale for a specific space portion. Outer surfaces are extracted from these PPF by either using a bounding surface (in case only one frame is available) or a expected outer surface (that is a bounding surface which is constructed by a temporal analysis of the function during time in order to reduce its uncertainty; therefore called "expected" outer surface).

Likewise the planes, the (expected) outer surfaces (hereafter referred to as EOS) receive multiple texture (also defined as color pattern) coordinates along viewing angles defined by the multiview capture with corresponding error bounds. Optionally the scene geometry elements can also receive a probabilistic semantic description; that is, a set of semantic tags associated with a probability value that measures the uncertainty about the semantic value of this scene geometry portion.

As a summary, the representation uses a background and at least one foreground model. The background model is typically composed of surface lightfields with probabilistic parameters that can be refined over time. The foreground model is composed of a probabilistic multiscale tree of objects that can have a semantic interpretation. For each node of the tree, a PPF is determined to keep track of uncertainties and allow to refine these over time, while EOS are the result of this refinement and are used for visualization as surface lightfields.

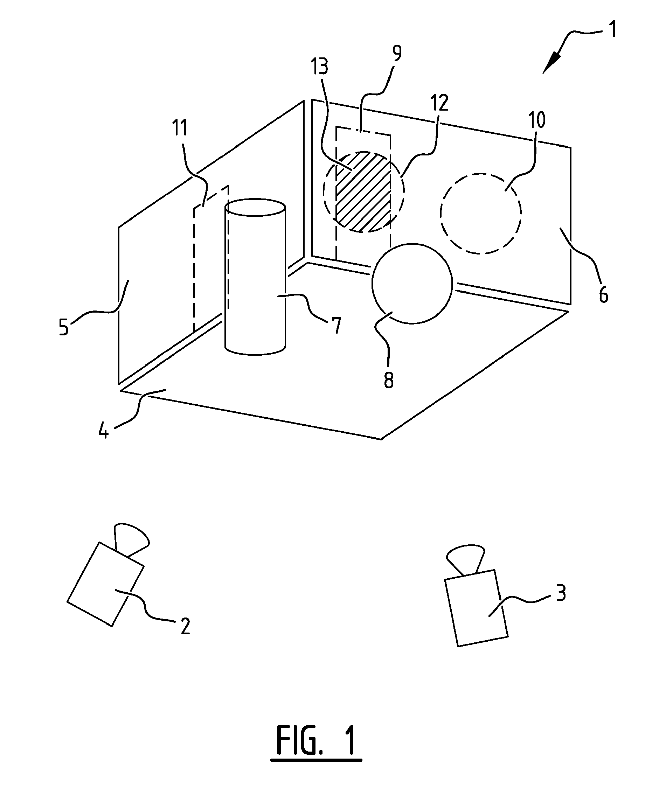

Figure 1 shows an environment 1 with at least one object. Figure 1 furthermore shows a first 3D image capturing device 2, and a second 3D image capturing device 3. The 3D image capturing devices are in the further description referred to as cameras 2, 3 or as 3D cameras. The cameras 2, 3 are located at different viewpoints with respect to the environment 1. The environment 1 of the example is a room wherein two objects (being a cylindrical object 7 and ball 8) are located. Thereby, for explanation and clarity purposes, the ceiling of the room is not shown.

The environment of figure 1 is captured according to the following method. A first image is captured using the camera 2. This captured image comprises an array of pixels, wherein each pixel typically comprises color intensity values (for example RGB values) and a depth value (since it is a 3D camera, the camera is adapted to measure a distance between the camera and the captured pixels). This image shows the environment 1 with the objects 7, 8 from a first view point, as a result of which some parts of the environment and objects are visible, and other parts of the environment and objects are occluded (as will be clear from the following description).

The captured first image is filtered to determine outer borders of the environment. In the present case, the ground surface 4 forms an outer border of the environment 1, and the environment 1 of the example further comprises a first wall 5 and a second wall 6 forming outer borders of the environment. Thereby, outer border of the environment 1 is defined as those parts of the environment beyond which no further elements can be seen in the image. Thereby, it will be clear that when looking at a room, a ground surface, a ceiling surface and one or more wall surfaces will generally form the outer borders of the environment. When for example looking at a football stadium, the environment will show a ground surface (formed by the grass), wall surfaces that extend upward with a limited height (formed by the stand of the football stadium), and the environment will not show a ceiling (since the football stadium is, at least in this example, open at the top). According to another example, where a landscape forms the environment, the outer borders of the environment only comprise a ground surface (since in an open landscape no walls are present). From the image of the camera 2, these outer borders are deduced. The skilled person will recognize that there are different approaches for extracting outer borders from a 3D image. Since the type of extraction is not essential for the invention, the skilled person can use any extraction mechanism. These extraction mechanisms are therefore not described in this description.

Based on the determined outer borders of the environment, which in the example of figure 1 are formed by a ground surface 4, a first wall surface 5 and a second wall surface 6, a digital environment is generated. This digital environment is generated in the form of a 3D model, wherein the outer borders are represented. This 3D model comprises all available information of the outer borders that can be deduced from the first image. This means that not only the position of the outer borders 4, 5, 6 is generated into a 3D model, but that the outer border elements 4, 5, 6 are also colored based on the color intensity values of the outer borders, available from the first image. Thereby, it will be clear from the example of figure 1, that some parts will be occluded. In the example of figure 1, object 7 occludes a first part 9 of the outer border. Furthermore, object 8 occludes a second part 10 of the outer border. Thus, when the digital environment is generated based on the image of camera 2, this first part 9 and second part 10 cannot be seen, and consequently no color information and texture information is available for these parts. To enhance the method for capturing an environment, the invention proposes to segment the digital model and provide the segments with an accuracy value. In the example of figure 1, the environment can be segmented and provided with an accuracy value so that the first wall 5 has a relatively high accuracy value (since it is not occluded for the camera 2). At least the first part 9 and the second part 10 of the second wall 6 are provided with a low accuracy value, since the information of these parts can only be assumed based on their neighborhoods. This shows that in generating digital environment, the parts 9 and 10 can be filled in, for example colored, based on neighborhood information. Thereby, since a low accuracy value is assigned to these parts 9, 10, this information will not be considered as 'true' or 'accurate' in the further processing of the digital model.

The first image (captured by the first camera 2) is further filtered for determining the objects 7, 8. For each of these objects 7, 8 a 3D model is generated, for example in the form of a 3D mesh (polygon mesh). The so-generated 3D models are then positioned within the generated 3D environment to thereby recreate the environment with the objects 1 in a digital manner.

A second image is captured using the second 3D camera 3. Thereby, the first image and second image are preferably captured at the same moment of time, or at least at substantially the same moment of time. The second image thereby shows the same environment and the same objects, but from a different viewpoint. The second image shows, analogue to the first image, an array of pixels, wherein each pixel comprises at least one color intensity value and a depth value. Preferably, the position of the first camera 2 and the second camera 3 with respect to the environment 1 is fixed and known in advance. Segments of the 3D model with low accuracy values are selected. In the example of figure 1 the parts 9 and 10 of the outer borders of the environment 1 are selected. From the second image, sections of the array of pixels are filtered that correspond to the selected first part 9 and the second part 10. Thereby, information from the second image is used to create/refine those parts 9, 10 of the digital model. In the example of figure 1, part 10 can be seen by the second camera 3. As a result, color information and texture information from the second image can be used to improve the digital model that is created based on the first image. Thereby, since the information in the updated part 10 of the 3D model is based on the second image, the accuracy value of this part 10 is increased after the update. Regarding part 9, in the example of figure 1, object 8 still occludes a subpart of the first part 9. Particularly, object 8 occludes the segment that is indicated with reference number 12. Object 7 occludes segment 11. Segment 11 is situated on the first wall 5. Since the first wall 5 was already completely visible in image 1, in the 3D model, the information (such as color information) regarding this segment 11 is known although it is not visible in the second image. Since occluded part 9 falls together with occluded segment 12, a portion 13 of the model is occluded in the two images. Therefore, this portion 13 cannot be seen in any of the images, and information in the 3D model will have a low accuracy, even after the update with information from the second image.

Since the 3D model comprises accuracy values, multiple images can be processed in an efficient manner. Particularly, as described above, when a second image is captured only those parts of the second image that relate to segments or parts in the model that have a low accuracy, should be processed. This significantly improves the 3D model creation.

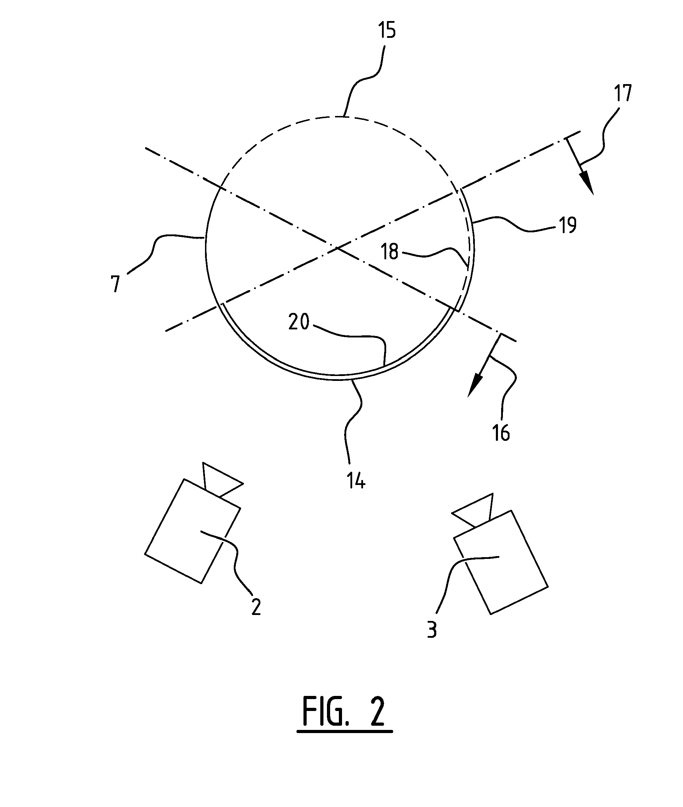

Figure 2 shows the effect of multiple viewpoints on an object 7. The figure shows how a first camera 2 captures a first view 14 of the object 7. After capturing the first object, the backside of the object (from the viewpoint of the first camera 2), being the parts 15, 18, are not visible and thus no information is available for these parts, 15, 18. These parts of the object are therefore created with an estimated shape and color, and a low accuracy is assigned to these parts. The second image from the second camera 3 is then used to complete the 3D model, at least for the part that can be seen in the second image. In the example of figure 2, the second image shows the segments 20 and 19 of the object 7. Segment 20 corresponds to part of the segment 14 that was already retrieved from the first image. Segment 19 was not visible in the first image, and information can therefore be added to the 3D model based on the second image for what concerns this second segment 19. This explanation based on the example shown in figures 1 and 2, shows how a 3D model can be updated using information from images showing other viewpoints. Thereby, the accuracy value is used for optimizing the processing of the 3D model creation. Particularly, further images are only processed for those parts that correspond to a segment of the 3D model having low accuracy values.

The advantages of this representation construction are:
- A reliable multi-scale geometry reconstruction
- An efficient sampling of the 3D/4D scene with a semantic interpretation that goes beyond simple octree decomposition
- A probabilistic framework for novel view synthesis (beyond free-viewpoint video synthesis) by geometry rendering and image processing, which enables to only process the regions that pose occlusion issues (temporal caching of the background and static parts of the foreground)
- A representation that enables random access to a portion of the 3D/4D scene, that is, significant memory and processing power is saved by only processing what is needed for generating the desired views.

In a first embodiment, the scene representation is built from a set of views (images captured by 3D cameras) with associated texture (in the form of color intensity values retrieved for each pixel of the view) and depth (in the form of depth values retrieved for each pixel of the view), wherein all the views are substantially simultaneously captured at a given time t. The scene background and foreground are separated from the views by fitting planes on distant depth portions of the multiple views (possibly refined with pixel-accurate multi-view background/foreground segmentation technique from multi-view plus depth input). A regression algorithm can be used to determine how many planes are needed to represent the background optimally; from a "skybox-alike" set of planes for outdoors scenes to three or more planes for indoors scenes. The same is done for "ground" and "ceiling" planes and therefore contain portions that are occluded by foreground objects. These planes are encoded with their geometric extent, their normal vector direction values as well as with multi-view texture coordinates that are associated to regularly sampled points on the planes. Error bounds are estimated for all these parameters based on the regression algorithm used to define each plane.

When generating a background in a digital environment, based on the views, occlusions are likely to occur. An example of an occlusion is a foreground object that obstructs a continuous view of the background such that at least a part of the background is not visible in the view. Situations can occur wherein occlusions overlap in multiple views such that part of the background cannot be seen in any view. A mechanism is described hereunder to cope with such situation.

Due to foreground occlusions, the multi-view texture coordinates are stored for implicitly regularly sampled points on the planes thanks to sparse vectors. Indeed a texture from a given view might not be available for an occluded region of the background plane but could be available for some other views; in the same line, some parts of the planes could be occluded in all views. In this case, coordinates are left empty or invalid with a predetermined specific value (for example -1 ; these portions can be later be filled in by inpainting methods). Once the background planes are defined, foreground objects are represented in a scene object tree.

The scene object tree is composed of elements that correspond to the scene representation for specific geometry positions. When the scene object tree is generated in the form of a polygon mesh representing the foreground objects, it is composed of a collection of vertices, edges and faces that defines the shape of the object.

The creation of the scene object tree is preferably done in multiple stages, wherein in a first stage rough elements are created (or a rough mesh is created, being a mesh having large vertices, edges and faces) and wherein the rough elements are refined in subsequent stages. At the first stage, a position probability 3D function (PPF) and its expected bounding (or outer) surface (that can be e.g. a sphere, a cylinder, a box when no temporal information is available to refine the uncertainty) of the foreground objects are defined by a few parameters (a radius and height in the case of a sphere or a cylinder and/or width and height in the case of a cylinder or a box) as well as multi-texture coordinates regularly sampled on the external outer surface.

The external outer surface is computed either by bounding the PPF or by computing a best expected outer surface based on a temporal analysis and refinement of the PPF.

It should be noted that if a portion of the PPF lies behind (with respect to the normal direction) the background planes or surfaces, this portion should be flagged as an exclusion zone that can be determined by a simple mathematical evaluation. The PPF and the error bounds or probabilities associated to the parameters of the expected outer surfaces are computed based on the uncertainty related to the position of the foreground geometry parts computed from the multi-texture and depth input. This can be done by taking into account the noise in the depth sensors along their viewing angle in the multi-view plus depth setting. A function can be modeled by fusing Gaussians with appropriate mean and variances for all input viewpoints.

It should be noted that the parameters of the Gaussians are not necessarily constant with respect to depth or viewing angle of the geometry portion as observed from the sensor; typically high values of depth are more impacted by noise than lower values of depth. The local curvature of the geometry portion can also be used to model the fusion of Gaussians as a flat portion of geometry will be measured and sensed with less noise than a prominent or picky portion of geometry, or a highly variable curvature portion of geometry. It follows that based on the scale and estimated position and orientation of the geometry portion observed, the position probability function might differ completely based on this analysis. This motivates the multi-scale approach that is preferred according to this disclosure.

The further refinements of the object models of this global foreground PPF are defined at further stages that does not need to be constructed on a regular dyadic manner with a regular sampling of the parent PPF such as a scale division by a factor two, but that will primarily be adaptive in a way that scale division transitions allow to discriminate multiple objects that are distant to each other or disconnected from each other. This is significantly different from usual octrees approaches that only use a regular multi-scale decomposition of the scene based on its bounding box dimensions.

The further refinements are determined by the PPF of these objects, the overlapping between the geometric extent of the PPFs of the objects being allowed. Likewise in the rough model, created in the first stage, the PPFs are computed based on the uncertainty on the position of the object or geometry portion in the scene based on sensor configuration and characteristics. The shape of the PPF should take into account the shape of the contained surface geometry portion that can be reconstructed from the multi-view texture plus depth input data (as explained before or more particularly, in case of an ellipsoid, the axes would coincide with the principal axis of the surface portion). Furthermore, multi-texture coordinates are associated to the expected outer surfaces of the PPF with a regular point sampling and associated error bounds. The criterion for deciding the optimal depth of the scene graph is chosen to suit the computational complexity requirements of the envisaged application. The maximum limit of the scale refinement would obviously be the scale at which only one point is contained in the PPF of that node. This corresponds to the scale at which the neighborhood information does no longer help reducing the uncertainty on the surface portion position and orientation. It should be noted that expected outer surfaces at lower scales can represent open surfaces that approximate the observed geometry such as a plane. For a given foreground object, the expected outer surface is represented or encoded as a surface quad or triangle mesh constructed from the observed multi-view texture and depth data, particularly if the used regression algorithm (for reducing uncertainty based on temporal observations) selects a high order functional such as a high order polynomial for a given geometric extent (with the order higher than three). In this case a surface model is preferred with each vertex receiving an error bound (being a value indicating the accuracy of the respective vertex) on its position and normal. For each stage and each object of the scene object tree, probabilistic flow vectors are computed between objects (i.e. PPFs) of equivalent stages between consecutive frames. The flow vectors are probabilistic because there might be some uncertainty of what is the exact corresponding object. It follows that several flow vectors are encoded together with their measure of confidence or probability.

Associated to the Background Planes and Foreground Scene Object Tree, input multiview textures and optionally depth are also part of the representation since multi-texture coordinates refer to these textures.

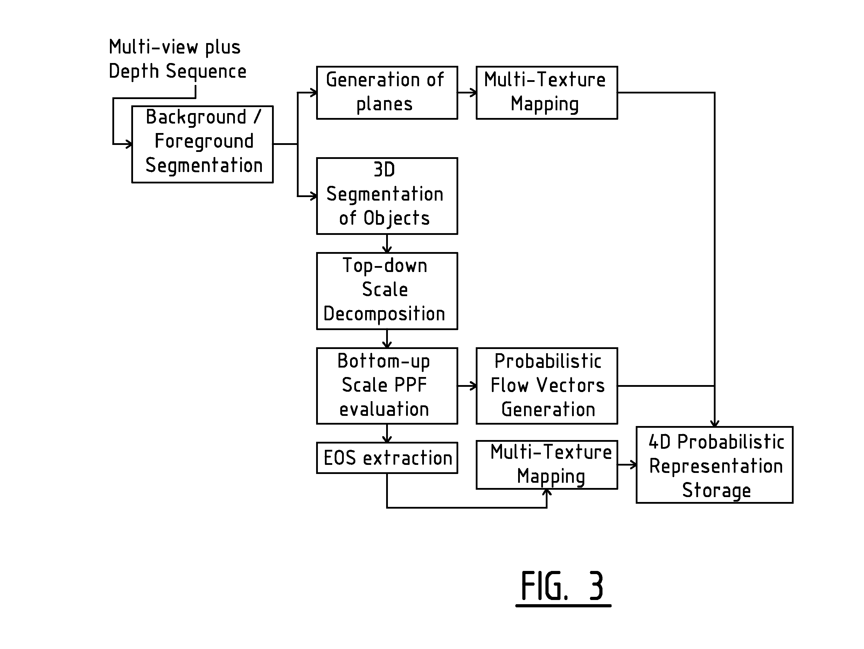

The construction process for capturing an environment with objects, and constructing a digital model that corresponds to the captured environment with objects, is illustrated in Figure 3.

According to a further embodiment of the invention, accuracy values on parameters of the representation are represented by a probability density function that can be e.g, for a position parameter, a 3D Gaussian function with 3D mean position and 3D standard deviations (possibly not isotropic), and for a scalar value a ID Gaussian with mean and standard deviation.

According to another embodiment, a probability density function is added to the elements in the view, but the multiview scene is previously analyzed by a semantic scene classifier. Semantic flags associated to geometry portions such that portions of the background planes or nodes of the scene object tree, are assigned to them as a supplemental parameter together with their uncertainty (or accuracy) measures. For example, if a portion of a background plane is identified with 80% certainty as being "sky" and 20% being "water", both flags will be associated to this background plane portion together with their respective uncertainty measure.

The invention enables a far more efficient post-production and better interactive viewing experiences for natural content thanks to its probabilistic approach.

The further advantage of the invention is to be able to better force a temporal consistency to the scene reconstruction as well as being adapted to the growing media that is lightfield video (each point of the scene has multiple light rays in different directions so as to enable refocus and viewing angle interactivity). The second key advantage is the highly adaptive scene sampling strategy that avoids restrictive regular sampling via voxel grids and octrees (that are also trees but that have a fixed maximum number of children for each node).

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for capturing an environment comprising at least one object, using at least two 3D image capturing devices located with respect to the environment at different viewpoints, the method comprising the steps of:
- capturing a first image of said environment via a first of the 3D image capturing devices, wherein the first image comprises an array of pixels each having color intensity values and each having a depth value;
- filtering the first image for determining outer borders of the environment;
- generating a digital environment in the form of a 3D model representing the outer borders;
- filtering the first image for determining the at least one object;
- generating at least one digital object in the form of at least one further 3D model representing the at least one object;
- positioning the at least one digital object in the digital environment to digitally re-create the environment with the at least one object;
wherein each of the models is segmented and wherein each segment is provided with an accuracy value determined based on a tolerance of the first 3D image capturing device, wherein the method further comprises:
- capturing a second image of said environment via a second of the 3D image capturing devices, wherein the second image comprises an array of pixels each having color intensity values and each having a depth value;
- selecting model segments with an accuracy value below a predetermined value;
- filtering the second image to extract pixels from the array that relate to the selected model segments; and
- updating the model segments using the information in the extracted pixels.

2. Method according to claim 1, wherein the accuracy value is an indicator of the degree of certainty that parameters defining the model segment are correct.

3. Method according to claim 2, wherein the degree of certainty is determined based on predetermined intensity values tolerances and predetermined depth value tolerances of the 3D image capturing devices.

4. Method according to any one of the previous claims, wherein the 3D image capturing devices are time-of-flight cameras.

5. Method according to any one of the previous claims, wherein the model is composed of elements representing the outer borders and respectively comprising at least a ground surface element and one or a combination of at least one side surface element and a ceiling element.

6. Method according to any one of the previous claims, wherein the at least one further model is formed as a polygon mesh being generated in multiple stages, wherein the number of elements forming the polygon mesh increases over the multiple stages.

7. Method according to claim 5 or 6, wherein the segments of the 3D model correspond to said elements.

8. Method according to any one of the previous claims, wherein said step of generating the digital environment and/or generating the at least one digital object comprises completing the digital environment by filling occluded parts of the environment based on predetermined completion algorithms.

9. Method according to any one of the previous claims, wherein the second image is captured simultaneously with the first image.

10. System comprising at least two 3D image capturing devices operationally connected to a processor programmed to perform the steps of the method of any one of the previous claims.

11. System according to claim 10, wherein the at least two 3D image capturing devices are adapted for being located with respect to an environment comprising at least one object at different viewpoints, and wherein the processor comprises filtering means adapted for filtering a first image for determining outer borders of the environment.

12. System according to claim 10 or 11, further comprising a memory that is adapted for storing a 3D model comprising 3D model segments, wherein the memory is further adapted for storing an accuracy value for each of the 3D model segments.

13. System according to claim 12, further comprising selecting means for selecting 3D model segments having an accuracy value below a predetermined accuracy value.

14. Data storage device encoding a program in machine-readable and machine-executable form to perform the steps of the method of any one of the previous claims 1-9.

15. Computer program in machine-readable and machine-executable form to perform the steps of the method of any one of the previous claims 1-9.
